# EUROPÄISCHE PATENTSCHRIFT

(11) **EP 1 946 992 B1**
(45) Veröffentlichungstag und Bekanntmachung des Hinweises auf die Patenterteilung: **10.11.2010**
(21) Anmeldenummer: 07123537.8
(22) Anmeldetag: 19.12.2007
(51) Int. Cl.: B62D 5/04

(54) **Verfahren und Steuergerät zum Betrieb einer elektrischen Servolenkung**
Method and control unit for operating an electric power steering
Procédé et appareil de commande destinés au fonctionnement d'une direction assistée électrique

(30) Priorität: 19.01.2007 DE 102007003783
(43) Veröffentlichungstag der Anmeldung: 23.07.2008
(73) Patentinhaber: ZF Lenksysteme GmbH, 73527 Schwäbisch Gmünd (DE)
(72) Erfinder: Heilig, Arnulf, 73529 Schwäbisch Gmünd (DE); Müller, Claus-Dieter, 73550 Waldstetten (DE); Pfletschinger, Georg, 73569 Eschach (DE)

(56) Entgegenhaltungen:
- EP-A- 0 900 711
- EP-A- 1 731 402

## Beschreibung

Die Erfindung betrifft ein Verfahren zum Betreiben einer elektrischen Servolenkung mit den Merkmalen des Oberbegriffs des Hauptanspruchs.

Die Erfindung umfasst ebenso ein Steuergerät für eine elektrische Servolenkung

Aus dem Stand der Technik sind elektrische Servo- Lenksysteme bekannt, die ein von einem Fahrer an einer Lenkhandhabe aufgebrachtes und mit einer Lenksäule eingeleitetes Lenkmoment in ein Lenkgetriebe zur Verstellung der Radlenkwinkel von gelenkten Rädern einleiten. Ein von diesem Lenkmoment abhängiges Unterstützungsmoment wird dabei von einem elektrischen Servomotor aufgebracht und mittels des Lenkgetriebes dem Lenkmoment additiv überlagert.

Das Lenkmoment kann aus einem Lenkmomentsensor, der im Lenkstrang zwischen dem Lenkgetriebe und der Lenkhandhabe angeordnet ist, gemessen werden. Die aus dem Sensor stammende Lenkmomentinformation wird einem Steuer-/ Regelgerät der elektrischen Servolenkung zugeführt, welches im Folgenden eine Sollgröße für den elektrischen Servomotor ermittelt, die dem abgegebenen Motormoment beziehungsweise einem in das Lenkgetriebe eingeleiteten Unterstützungsmoment entspricht.

Die Lenkmomentinformation kann auch unter Verwendung der Winkelinformation aus einem Sensor im Lenkgetriebe, (Ritzelwinkelsensor) und einem Lenkwinkelsensor, der im Lenkrad oder im Bereich des Lenkstrangs angeordnet ist, mittels Differenzmessung und nachfolgender Multiplikation mit einem konstanten Faktor ermittelt werden.

Aufgabe vorliegender Erfindung ist es, ein Verfahren zum Betrieb einer elektrischen Servolenkung anzugeben, welches bei Ausfall oder fehlerhafter Lenkmomentinformation dem Fahrer ein zumutbares und komfortables Lenkverhalten zur Verfügung stellt.

Diese Aufgabe wird mit den kennzeichnenden Merkmalen des Anspruchs 1 gelöst.

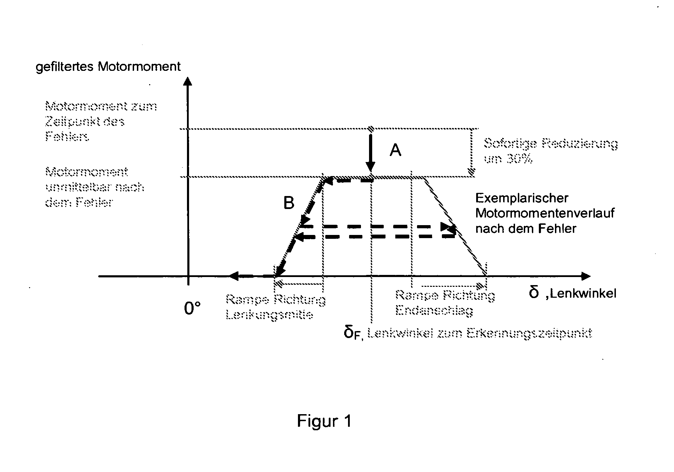

Die Wirkungsweise des erfindungsgemäßen Verfahrens wird anhand des in der Figur 1 dargestellten Ausführungsbeispiels erläutert.

Die Figur 1 zeigt auf der Ordinate ein gemitteltes Motormoment, wie es von einem elektrischen Servomotor in Folge einer Sollvorgabe des Unterstützungsmoments in das Lenkgetriebe eingeleitet wird. Auf der Abszisse ist der gemessene Lenkwinkel entsprechend der Lenkwinkelinformation aufgetragen.

Eine Steuer-/ Regeleinheit überprüft zyklisch die Lenkmomentinformation auf Plausibilität und Fehlerhaftigkeit. Fällt die Lenkmomentinformation aus oder wird sie als "fehlerhaft" beurteilt, so wird von nun an die Sollvorgabe des Unterstützungsmoments in Abhängigkeit eines vom Fahrer initiierten zukünftigen Lenkwinkelverlaufs reduziert.

Hierzu wird zum Erkennungszeitpunkt die Lenkwinkelinformation δ_{F}, in der Steuer-/ Regeleinheit gespeichert. Die Reduzierung der Sollvorgabe für das Unterstützungsmoment erfolgt im Folgenden monoton in Abhängigkeit des weiteren Verlaufs der Lenkwinkelinformation.

Von Vorteil ist es, das Unterstützungsmoment unmittelbar nach Erkennung des Fehlerzustandes um einen festlegbaren Wert zu reduzieren. Fahrversuche haben gezeigt, dass das Unterstützungsmoment um etwa ein drittel reduziert werden kann, ohne dass dies den Fahrer allzu sehr irritiert. ( Pfeil A)

Die Offenlegungsschrift EP 1 731 402 A1 offenbart eine Lenksteuereinrichtung für ein Kraftfahrzeug, bei dem eine Lenkmoment-Abschätzungseinheit vorgesehen ist, die ein Lenkmoment an einem Lenkrad auf Grundlage eines Motorstromes eines elektrischen Lenkaktuators schätzt. Ein Drehmomentsensor detektiert ein Lenkmoment, welches die maßgebliche Größe für die Steuerung des Lenkaktuators darstellt. Eine Vergleichseinheit vergleicht den Wert des detektierten Lenkmoments mit dem geschätzten Wert aus der Abschätzungseinheit. Es ist vorgesehen, dass die Steuerung des Lenkaktuators im Falle einer Fehlfunktion des Drehmomentsensors auf Grundlage des geschätzten Werts für das Lenkmoment erfolgt.

In der Offenlegungsschrift EP 0 900 711 A2 wird eine elektrische Lenkeinrichtung offenbart, bei der die Lenkunterstützung auf Grundlage einer Ausgangsgröße eines Drehmomentsensors gesteuert. Die Einrichtung kumuliert dabei die Ausgangswerte in jeder Abtastperiode über einen vorgegebenen Zeitbereich hinweg und vergleicht diese mit einem vorgegebenen Wert, um eine Verschiebung des Nullpunkts des Drehmomentsensors zu erkennen und in Folge einer erkannten Verschiebung des Nullpunkts einen Warnhinweis zu generieren.

In der Figur 1 ist ein möglicher, vom Fahrer initiierter Lenkwinkelverlauf anhand der gestrichelten Pfeile B dargestellt. Die Reduzierung des Unterstützungsmoments erfolgt nun schrittweise an festlegbaren Lenkwinkel- Abständen zu der "eingefrorenen" Lenkwinkelinformation δ_{F}. Besonders Vorteilhaft ist es dabei, die Abstände symmetrisch, entlang einer rampenähnlichen Funktion, um die zum Fehlerzeitpunkt ermittelte Lenkwinkelinformation δ_{F} festzulegen.

Des Weiteren ist vorgesehen, bei Durchlaufen der "Null-Grad" - Stellung des Lenkrades (Geradeausfahrt) entsprechend einer Lenkwinkelinformation von etwa +/-5° die Sollvorgabe für das Unterstützungsmoment auf Null zu setzen ( keine ServoUnterstützung).

In einer weiteren Variation des erfindungsgemäßen Verfahrens ist vorgesehen, das Unterstützungsmoment zusätzlich in Abhängigkeit der Zeit zu reduzieren. Dies kann in besonders einfacher Weise schrittweise oder linear erfolgen.

Gegenstand der Erfindung ist auch ein Steuergerät mit elektronischen Speicher- und Recheneinheit für eine elektrische Servolenkung, welches dafür vorbereitet ist, ein Computerprogramm auszuführen, welches nach einem der beanspruchten Verfahren arbeitet.

## Patentansprüche

1. Verfahren für den Betrieb einer elektrischen Servolenkung für ein Kraftfahrzeug, mit
- einer Lenkhandhabe,
- einem elektrischen Servomotor,
- einem Lenkgetriebe, welches ein an der Lenkhandhabe eingeleitetes Lenkmoment und ein vom Servomotor aufgebrachtes Motormoment zur Erzeugung einer Lenkbewegung überlagert.
- einer elektronischen Steuer/-Regeleinheit, die als Eingangsgröße eine Information, geeignet zur Beschreibung eines Lenkwinkels und geeignet zur Beschreibung eines im Lenkstrang wirkenden Lenkmoments erhält und eine Sollvorgabe für das vom Servomotor aufzubringende Unterstützungsmoment bestimmt, im Falle einer als "fehlerhaft" diagnostizierten Lenkmomentinformation die Sollvorgabe für das Unterstützungsmoment in Abhängigkeit der Lenkwinkelinformation (δ) beeinflusst wird
**dadurch gekennzeichnet, dass,**
dass die Sollvorgabe des Unterstützungsmoments zumindest monoton reduziert wird.

2. Verfahren für den Betrieb einer elektrischen Servolenkung nach Anspruch 1, **dadurch gekennzeichnet, dass** eine schrittweise Reduzierung der Sollvorgabe des Unterstützungsmoments an festlegbaren Lenkwinkel- Abständen in Bezug zu dem zum Zeitpunkt des diagnostizierten Fehlers eingefrorenen Lenkwinkelwerts (δ_{F}) bei Durchlaufen einer vom Fahrer initiierten Lenkbewegung erfolgt.

3. Verfahren für den Betrieb einer elektrischen Servolenkung nach Anspruch 2, **dadurch gekennzeichnet, dass** die festlegbaren Abstände auf einer rampenähnlichen, vorzugsweise symmetrischen Funktion liegen.

4. Verfahren nach einem der vorgehenden Ansprüche 1 bis 3, **dadurch gekennzeichnet, dass** bei Durchlaufen oder Annäherung der Lenkbewegung in "Null-Stellung" entsprechend einer Lenkwinkelinformation von in etwa +/- 5°, die Sollvorgabe für das Unterstützungsmoments unmittelbar auf den Wert Null gesetzt wird.

5. Verfahren für den Betrieb einer elektrischen Servolenkung nach einem der vorgehenden Ansprüche 1 bis 4, **dadurch gekennzeichnet, dass** die Reduzierung Sollvorgabe für das Unterstützungsmoment zusätzlich in zeitlicher Abhängigkeit erfolgt.

6. Steuergerät für ein elektrisches Servolenksystem mit Mittel zur Speicherung und Ausführung eines Programm-Moduls, **dadurch gekennzeichnet, dass** im das Programm-Modul ein Verfahren implementiert ist, welches nach einem der vorstehenden Ansprüche 1 bis 5 arbeitet.

## Claims

1. Method for operating an electric power steering system for a motor vehicle, having
- a steering handle,
- an electric servo motor,
- a steering gear which superimposes a steering torque applied to the steering handle and a motor torque which is applied by the servo motor and has the purpose of generating a steering movement,
- an electronic open/loop control unit which receives, as an input variable, information which is suitable for describing a steering angle and is suitable for describing a steering torque which acts in the steering train, and determines a prescribed setpoint value for the assistance torque which is to be applied by the servo motor, and in the case of steering torque information which is diagnosed as being "incorrect" the prescribed setpoint value for the assistance torque is influenced as a function of the steering angle information (δ),
**characterized in that**
the prescribed setpoint value of the assistance torque is reduced at least monotonously.

2. Method for operating an electric power steering system according to Claim 1, **characterized in that** incremental reduction of the prescribed setpoint value of the assistance torque takes place at definable steering angle intervals with respect to the steering angle value (δ_{F}) which is frozen at the time of the diagnosed error when a steering movement initiated by the driver is being passed through.

3. Method for operating an electric power steering system according to Claim 2, **characterized in that** the definable intervals lie on a ramp-like, preferably symmetrical function.

4. Method according to one of the preceding Claims 1 to 3, **characterized in that**, when the steering movement in the "zero" position is being passed through or approached in accordance with steering angle information of approximately +/- 5°, the prescribed setpoint value for the assistance torque is adjusted immediately to the value zero.

5. Method for operating an electric power steering system according to one of the preceding Claims 1 to 4, **characterized in that** the reduction in the prescribed setpoint value for the assistance torque takes place additionally as a function of time.

6. Control unit for an electric power steering system having means for storing and executing a program module, **characterized in that** a method which operates according to one of the preceding Claims 1 to 5 is implemented in the program module.

## Revendications

1. Procédé de fonctionnement d'une direction assistée électrique pour un véhicule automobile comprenant :
- une manette de direction,
- un servomoteur électrique,
- un mécanisme de direction qui superpose un couple de direction induit au niveau de la manette de direction et un couple moteur appliqué par le servomoteur pour générer un mouvement de direction,
- une unité électronique de commande/régulation qui reçoit comme grandeur d'entrée une information appropriée pour décrire un angle de direction et appropriée pour décrire un couple de direction agissant dans la branche de direction et qui détermine une indication de consigne pour le couple d'assistance à appliquer par le servomoteur, l'indication de consigne pour le couple d'assistance étant influencée en fonction de l'information d'angle de direction (δ) dans le cas d'une information de couple de direction diagnostiquée « erronée »,
**caractérisé en ce que**
l'indication de consigne du couple d'assistance est soumise au moins à une réduction monotone.

2. Procédé de fonctionnement d'une direction assistée électrique selon la revendication 1, **caractérisé en ce qu'**une réduction pas à pas de l'indication de consigne du couple d'assistance a lieu à des intervalles à fixer de l'angle de direction en référence à la valeur de l'angle de direction (δ_{F}) figée au moment de l'erreur diagnostiquée lors de l'accomplissement d'un mouvement de direction initié par le conducteur.

3. Procédé de fonctionnement d'une direction assistée électrique selon la revendication 2, **caractérisé en ce que** les intervalles à fixer se trouvent sur une fonction de type rampe, de préférence symétrique.

4. Procédé selon l'une des revendications précédentes 1 à 3, **caractérisé en ce que** lorsque le mouvement de direction franchit ou s'approche de la « position zéro » d'après une information d'angle de direction d'environ +/-5°, l'indication de consigne pour le couple d'assistance est directement mise à zéro.

5. Procédé de fonctionnement d'une direction assistée électrique selon l'une des revendications précédentes 1 à 4, **caractérisé en ce que** la réduction de l'indication de consigne du couple d'assistance s'effectue en plus en fonction du temps.

6. Contrôleur pour un système de direction assisté électrique comprenant des moyens pour mémoriser et exécuter un mode programme, **caractérisé en ce** dans le mode programme est mis en oeuvre un procédé qui fonctionne selon l'une des revendications précédentes 1 à 5.
